# EUROPEAN PATENT APPLICATION

(11) **EP 1 634 778 A1**
(43) Date of publication of application: **15.03.2006**
(21) Application number: 05018412.6
(22) Date of filing: 24.08.2005
(51) Int. Cl.: B60R 21/16

(54) **Airbag device and vehicle equipped therewith**

(30) Priority: 13.09.2004 JP 2004265534; 25.03.2005 JP 2005087965
(71) Applicant: Mazda Motor Corporation, Aki-gun, Hiroshima 735-8670 (JP)
(72) Inventor: Hirata, Motoharu c/o Mazda Motor Corp., Hiroshima 730-8670 (JP)
(74) Representative: Müller-Boré & Partner Patentanwälte

(57) **Abstract**

The air bag device 2 is provided at the periphery of the lower end portion of the back window 11 provided at the upper portion of the back door 1, and comprises the air bag cushion 21 to be inflated at the vehicle rear crash, the inflator 22 to supply the high pressure gas to the air bag cushion 21, and the gas supply pipe 23 to connect the inflator 22 with the air bag cushion 21. Accordingly, the air bag cushion can be inflated surely between the head portion of the passenger and the back door even if the seat back is inclined rearward due to the impact at the vehicle rear crash and thereby the impact absorption function and the occupant restraint function of the air bag device can be attained surely.

## Description

The present invention relates to a vehicle equipped with an air bag device for a rear crash, such as one-box type or two-box type of vehicles, with a back door at a vehicle rear end portion, and to an airbag device therefor. Particularly, the present invention relates to the vehicle equipped with an air bag device and to a rear crash airbag device for a rear crash in which the air bag device can be operated surely even if a seat back of a rear seat is inclined rearward e.g. due to an impact at the vehicle rear crash.

The air bag device has been recently installed in various portions of the vehicle for an occupant protection.

For example, US Patent Application Publication No. 2004/0066022 A1 discloses the air bag device which is provided at the header of the roof rear end and inflate the air bag cushion to prevent the passenger in the rear seat from being moved rearward at the vehicle rear crash.

According to this publication, it is disclosed that the air bag device can attain not only the impact absorption function but also the passenger restraint function by preventing the rear seat passenger from being moved rearward.

Also, the above-described publication discloses the inflation-direction control device which guides the inflation direction of the air bag device along the window glass, thereby operating the air bag device surely, preventing an interference of the inflated air bag cushion with the head portion of the passenger.

According to this publication, it is disclosed that the inflation-direction control device can define the inflation direction of the air bag device surely and thereby the occupant protection of the rear seat passenger at the vehicle rear crash can be attained more securely.

Further, Japanese Patent Laid-Open Publication No. 11-198699 discloses the air bag device which is provided at the upper end of the rear seat back and inflated rearward. This publication also discloses that the occupant protection of the rear seat passenger at the vehicle rear crash can be attained.

Herein, in the vehicle, such as the one-box type or two-box type of vehicles, with the back door at the vehicle rear end portion, the rear seat may be provided such that its seat back is located just behind the back door to provide a roomy passenger compartment.

In this case, namely in the vehicle that the rear seat back and the back door are located-close to each other, there would occur a problem when a big impact is applied due to the vehicle rear crash.

This problem is that the air bag cushion would not be inflated properly between the head portion of the passenger and the back door because the distance between them is or becomes very short by the seat back being inclined rearward due to the passenger's weight being applied to the seat back rearward at the vehicle rear crash (for example, in case that the seat back is deformed rearward or a hinge at the lower end of the seat back is broken).

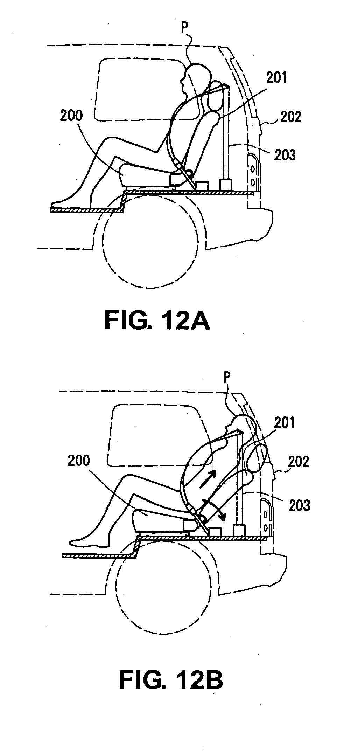

Herein, the above-described problem will be described referring to state explanatory diagrams of FIGS. 12A, 12B. FIG. 12A is a vehicle rear side view illustrating a passenger normally-sitting state, and FIG. 12B is a vehicle rear side view illustrating a passenger movement state at the vehicle rear crash.

In the normal state illustrated in FIG. 12A, since a seat back 201 stands substantially upright even if a passenger P sits in a rear seat 200 with the passenger's back attached to the seat back 201, there exits some space between the head portion of the passenger P and a back door 202. Accordingly, the air bag cushion can be inflated properly in this case.

However, particularly in the state, when the vehicle rear crash occurs, illustrated in FIG. 12B, since the seat back 201 is inclined rearward with the resilient deformation or the breakage of the seat back 201 when the weight of the passenger P is applied to the seat back 201, the torso (upper body) of the passenger P would be inclined rearward. Also, in case that, for example, a seat belt 203 to hold the shoulder of the passenger is provided at the pillar, the seat belt 203 would be slip off from the shoulder and therefore the passenger P would be moved obliquely, upward and rearward. Accordingly, the head portion of the passenger P and the back door 202 get very close to each other, and thereby it would become difficult for the air bag cushion to be inflated between them properly.

In the case where the head portion of the passenger and the back door has got very close to each other as described above, the air bag device can not be inflated properly. Thus, even the air bag device disclosed in the above-described publications would not attain their function effectively.

Namely, in the conventional devices which did not consider this matter sufficiently, when the seat back is inclined rearward, the head portion of the passenger and the back door get closer to each other than the normal state. Accordingly, it would become difficult for the air bag cushion to be inflated between the head portion of the passenger and the back door properly. Thus, there is a concern that the impact absorption function and the occupant restraint function would not be attained properly.

The present invention has been devised in view of the above-described problem, and an object of the present invention is to provided a vehicle equipped with an air bag device for a rear crash and a rear crash airbag device in which the air bag cushion can be inflated surely between the head portion of the passenger and the back door even if the seat back is inclined rearward e.g. due to the impact at the vehicle rear crash, and thereby can attain properly the impact absorption function and the occupant restraint function of the air bag device.

This object is solved by the vehicle equipped with an air bag device for a rear crash according to the present invention of claim 1 and by an airbag device according to claim 11. Preferred embodiments of the present invention are subject of the dependent claims.

According to the present invention, there is provided a vehicle equipped with an air bag device for a rear crash, comprising a back door provided at a rear end of the vehicle, a rear seat provided in front of the back door, a seat back of which is located close to the back door, and an air bag device provided at or near a periphery of an end portion (preferably a substantially lower end portion) of a back window of the back door, the air bag device being operative to be inflated or deployed at least partly between the back door and the rear seat at a vehicle rear crash.

Accordingly, since the air bag device is provided at or near the periphery of the (preferably lower) end portion of the back window of the back door, the air bag cushion is inflated in the opposite direction to the rearward inclined direction of the seat back, to which the passenger's weight is applied, at the vehicle rear crash.

Namely, by providing the air bag device at or near the periphery of the (preferably lower) end portion of the back window, the air bag cushion can function so as to prevent the rearward inclination of the seat back properly.

Herein, a general type of bag-shaped cushion or a curtain-shaped cushion may be applied as the air bag cushion of the air bag device as long as they can attain so as to prevent the rearward inclination of the seat back.

According to a preferred embodiment of the present invention, the inflation direction of at least one air bag cushion of the air bag device is set to be directed at an angle different from 0° or 180°, preferably substantially normal to a widthwise direction or substantially upward, such that the inflated air bag cushion is located substantially between a portion above the seat back of the rear seat and the back door.

Accordingly, the inflation direction of the air bag cushion of the air bag device is set to be directed at an angle different from 0° or 180°, preferably substantially normal to a widthwise direction or substantially upward, and thereby the inflated air bag cushion is located substantially between the portion above the seat back (for example, the headrest position) of the rear seat and the back door.

Thus, the air bag cushion can be inflated surely between the head portion of the passenger above the seat back and the back door even if the air bag device is provided at the periphery of the (lower) end portion of the back window, thereby attaining the impact absorption function and the occupant restraint function.

According to another preferred embodiment of the present invention, there is provided a support device to support a side end portion of the air bag cushion, which is inflated in a curtain shape, at a periphery of a side end portion of the back window of the back door.

Accordingly, the side end portion of the air bag cushion which is inflated in the curtain shape is supported at the periphery of the side end portion of the back window by the support device.

Thus, since the air bag cushion is inflated surely in the curtain shape to the periphery of the side end portion of the back window, the back window can be covered surely by the air bag cushion and thereby the air bag cushion can be inflated surely between the head portion of the passenger and the back door.

According to another preferred embodiment of the present invention, there is provided at the back door a tension application device which pulls or operates substantially in an inflation direction, preferably substantially upward, at least one side end portion of the air bag cushion, and the tension application device is constituted so as to apply a lateral tension to an (preferably upper or distal) end portion of the air bag cushion when the air bag cushion is inflated.

Accordingly, the side end portion of the air bag cushion is pulled substantially in an inflation direction, preferably substantially upward, by the tension application device, and the lateral tension is applied to the (preferably distal or upper) end portion of the air bag cushion when the air bag cushion is inflated.

Thus, since the lateral tension is applied to the air bag cushion by the tension device, the air bag cushion can be inflated surely so as to cover the back window and thereby the air bag -cushion can be inflated surely at least partly between the head portion of the passenger and the back door.

Herein, a pre-tensioner device which is used at the seat belt device or a tension application device with resilient members, such as closes, spring or rubber, may be applied as the above-described tension application device.

According to another preferred embodiment of the present invention, the air bag cushion of the air bag device is constituted so as to push forward the seat back, preferably a back face of the seat back, when the air bag cushion is inflated or deployed.

Accordingly, the back face of the seat back is pushed forward by the inflation of the air bag cushion.

Thus, since at the vehicle rear crash the rearward inclination of the seat back is prevented properly and the rearward movement of the passenger is prevented surely, the head portion of the passenger and the back door can be prevented surely from getting close to each other.

According to another preferred embodiment of the present invention, the air bag device is located below an upper end of the seat back, and the inflation direction of the air bag cushion is set to be directed substantially upward with respect to a horizontal direction.

Accordingly, since the air bag device is located below the upper end of the seat back and the air bag cushion is inflated, the air bag cushion is inflated in an oblique direction from the lower position at the vehicle front side to the upper position.

Thus, both the function of making the inflated air bag cushion push forward the back face of the seat back and the function of inflating the air bag cushion so as to be located between the head portion of the passenger and the back door can be attained.

According to another preferred embodiment of the present invention, the air bag cushion of the air bag device comprises a first cushion portion which pushes or urges substantially forward the seat back, preferably the back face of the seat back, and a second cushion portion which is inflated substantially upward so as to be at least partly located substantially between the portion above the seat back and the back door.

Accordingly, the first cushion portion pushes forward (preferably the back face of) the seat back and the second cushion portion is inflated substantially upward so as to be at least partly located substantially between the portion above the seat back and the back door.

Thus, the function of pushing (preferably the back face of) the seat back substantially away from the back door is attained by the first cushion portion and the function of inflating the air bag cushion at least partly between the head portion of the passenger and the back door is attained by the second cushion portion, and thereby the respective functions can be attained surely by the respective cushion portions.

According to another preferred embodiment of the present invention, there is provided at the rear seat a reclining mechanism operative to change a reclining angle of the seat back, and there is provided a space for allowing a reclining of the seat back behind the seat back.

Accordingly, since the air bag cushion is inflated in the opposite direction to the rearward inclined direction of the seat back, the air bag cushion can be inflated properly between the head portion of the passenger and the back door even if the seat back is located close to the back door by inclining the seat back rearward with the reclining mechanism.

Thus, the impact absorption function and the occupant restraint function of the air bag device can be attained by inflating the air bag cushion surely between the head portion of the passenger and the back door.

According to another preferred embodiment of the present invention, the air bag cushion of the air bag device in a folded state thereof is provided at a lower edge portion and both side edge portions of the back window in a substantially U shape, and an upper end portion of the air bag cushion in an inflated state thereof is located above an upper edge portion of the back window.

Accordingly, since the air bag cushion is folded and provided at the lower edge portion and the both side edge portions and inflated with its upper end portion located above the upper edge portion of the back window, it engages with the substantially entire periphery of the back window in the inflated state.

Thus, the upper end potion of the air bag cushion can be prevented from being moved rearward and thereby the occupant restraint force can be prevented from decreasing improperly.

According to another preferred embodiment of the present invention, the air bag cushion comprises an inflation portion which is inflated by a gas supply so as to extend from a lower end portion to the upper end portion thereof.

Accordingly, the inflation portion of the air bag cushion is formed extending from its lower end portion to its upper end portion, and it is inflated like poles vertically extending so as to constitute a bridge structure over the back window.

Thus, the rearward movement of the air bag cushion can be prevented properly with the increased vertical tension of the air bag cushion and thereby the occupant restraint force can be prevented from decreasing improperly.

According to the invention, there is further provided an air bag device for a rear crash of a vehicle, in particular according to the invention or a preferred embodiment thereof, which air bag device is to be arranged at or near a periphery of an end portion of a back window of a back door provided at a rear end of the vehicle, wherein a rear seat is provided in front of said back door, a seat back of which is located close to the back door, the air bag device being operative to be inflated between said back door and said rear seat at a vehicle rear crash.

Other features, aspects, and advantages of the present invention will become apparent from the following description which refers to the accompanying drawings.
FIG. 1 is a schematic side view of a rear portion of a vehicle of the first embodiment.
FIG. 2 is a back view of the vehicle rear portion of the first embodiment.
FIG. 3 is a sectional view taken along line A-A of FIG. 2.
FIG. 4 is an enlarged sectional view of a major portion of FiG. 3.
FIG. 5 is a sectional view of an air bag cushion.
FIG. 6 is a timing chart to explain an operational state of an air bag device.
FIG. 7 is a schematic side view of the vehicle rear portion of the second embodiment.
FIG. 8 is a back view of the vehicle rear portion of the second embodiment.
FIG. 9 is a sectional view taken along line B-B of FIG. 8.
FIG. 10 is a schematic side view of the vehicle rear portion of the third embodiment.
FIG. 11 is a back view of the vehicle rear portion of the third embodiment.
FIG. 12A is a vehicle rear side view illustrating a passenger normally-sitting state, and FIG. 12B is a vehicle rear side view illustrating a passenger movement state at a vehicle rear crash.

Hereinafter, preferred embodiments of the present invention will be described referring to the accompanying drawings. It should be understood that even though embodiments are separately described, single features thereof may be combined to additional embodiments.

### EMBODIMENT 1

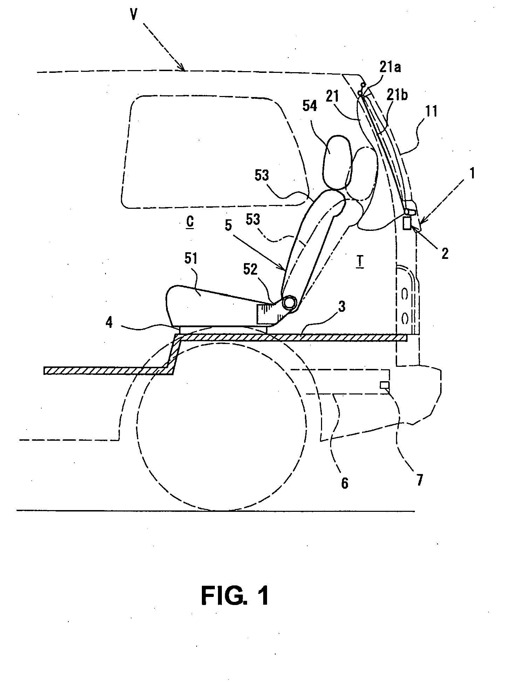

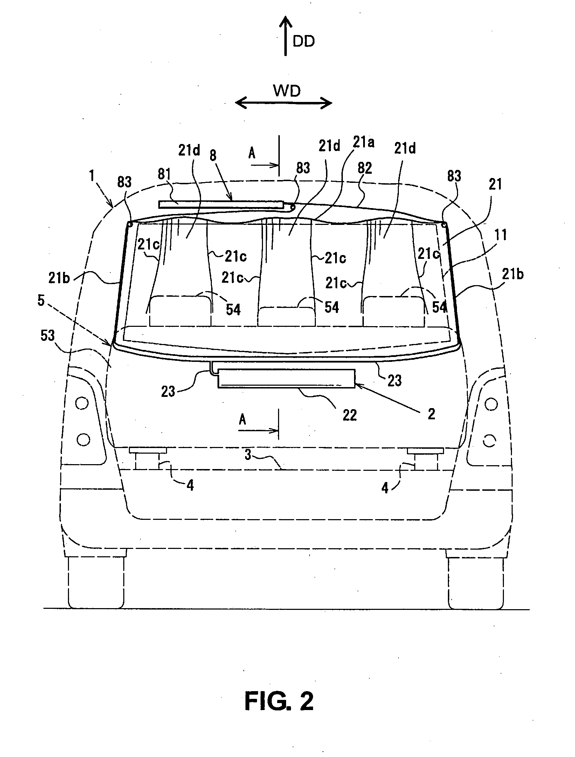

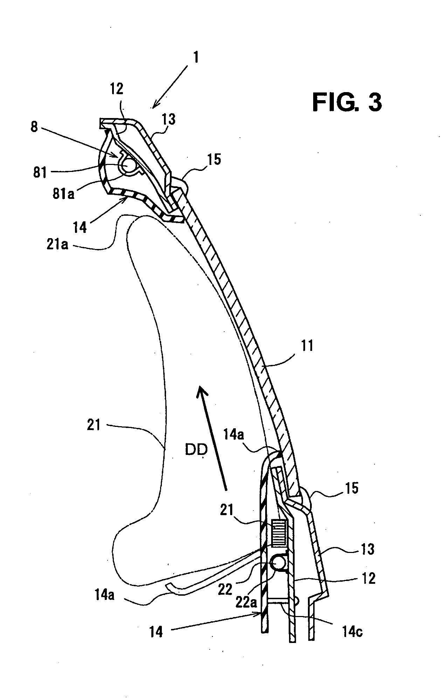

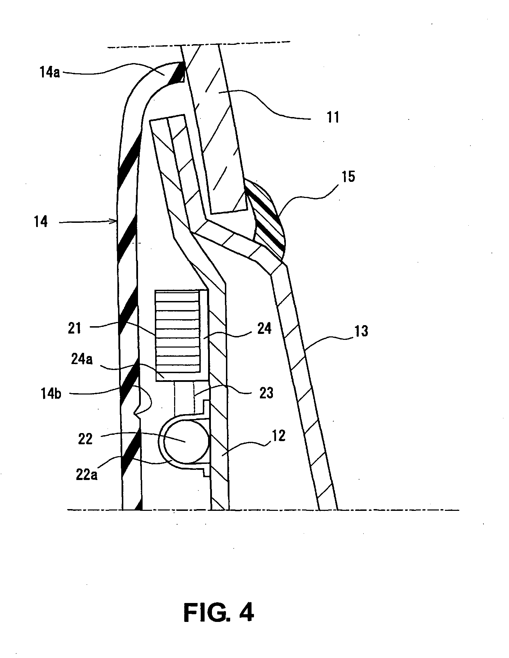

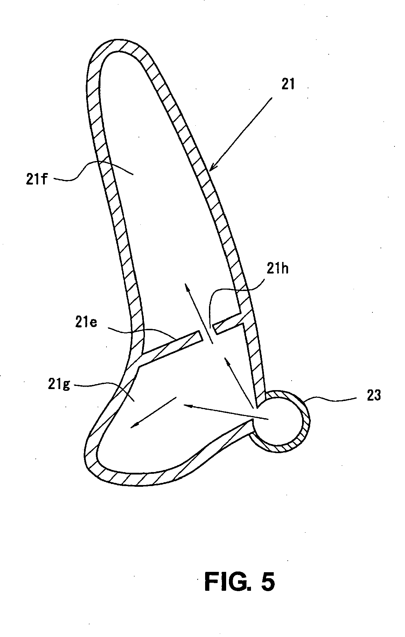

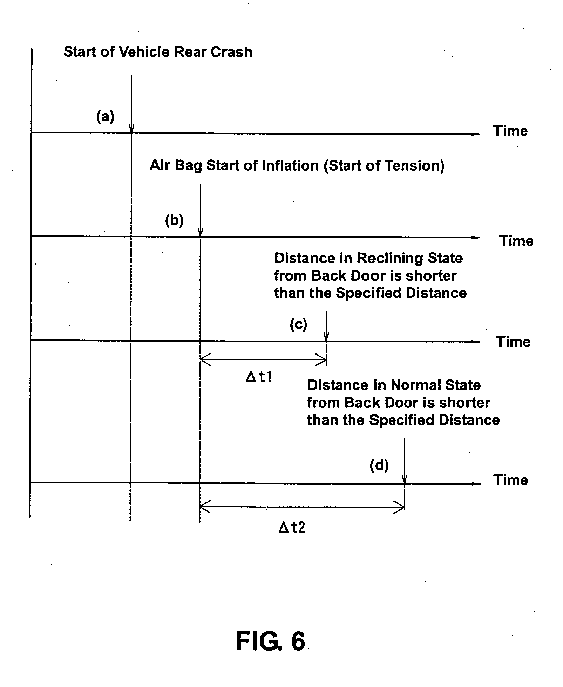

At first, a first preferred embodiment illustrated in FIGS. 1 through 6 will be described. FIG. 1 is a schematic side view of a rear portion of a vehicle equipped with an air bag device for a rear crash according to a preferred embodiment of the present invention. FIG. 2 is a back view of the vehicle rear portion. FIG. 3 is a sectional view taken along line A-A of FIG. 2. FIG. 4 is an enlarged sectional view of a major portion of FIG. 3. FIG. 5 is a sectional view of an air bag cushion used in the air bag device of the present embodiment. FIG. 6 is a timing chart to explain an operational state of the air bag device of the present embodiment.

As illustrated in FIG. 1, an air bag device 2 of the present embodiment is or is to be installed in or at or on a back door 1 provided at a rear end of a vehicle V. A floor panel 3 extends in front of the back door 1 so as to form a floor for a passenger compartment C and/or a baggage compartment T. A rear seat 5 is provided on the floor panel 3 preferably via a slide rail 4.

Below the floor panel 3 are provided one or more rear side frames 6 which extend substantially in a longitudinal direction of the vehicle. A rear crash sensor 7 preferably comprised of an acceleration sensor is provided at or on (preferably a rear end of) the rear side frame 6.

The above-described rear seat 5 comprises a seat cushion 51 which is provided on the slide rail 4, a seat back 53 which is provided at a rear end of the seat cushion 51 via a hinge 52 preferably with a reclining mechanism, and a headrest 54 which is provided at a top end or distal end portion of the seat back 53.

Herein, there is provided a seat belt, not illustrated here, which preferably is a pillar type of seat belt, and a retractor of the seat belt is provided at a middle or intermediate portion of a rear pillar or post of the vehicle.

The rear seat 5 is provided so as to slide substantially longitudinally along the slide rail 4, and FIG. 1 illustrates the rear seat 5 which is slid and located substantially in a rearmost position. The position of the seat back 53 which is illustrated by a solid line shows a normal use state, while the position illustrated by a dash-dotted line shows a reclining state.

As apparent from FIG. 1, the rear seat 5 is basically located at the rear portion in the vehicle V, so that a roomy space can be provided to the passenger compartment C. Accordingly, when the rear seat 5 has been slid and located substantially in the rearmost position and the seat back 53 has been changed to the reclining state, the seat back 53 is located so close to the back door 1 that a very narrow space T is just formed between the rearward-inclined seat back 53 and the back door 1.

Herein, the "close" means a positional relationship that if the hinge 52 of the rear seat 5 was broken e.g. due to the vehicle rear crash and then the seat back 53 was positioned substantially horizontally, the upper end of the seat back 53 (including the headrest 54) would interfere with the back door 1.

In case the rear seat 5 is provided as described above, when the vehicle rear crash occurs, the weight of the passenger is applied to the seat back 53 of the rear seat 5, and thereby the seat back 53 is resiliently deformed so as to be inclined rearward or the hinge 52 is deformed or broken, so that there may occur a risk of the interference with the back door 1.

The above-described air bag device 2 is provided at or near a periphery of (preferably a lower end portion of) a back window 11 provided at an intermediate or upper portion of the back door 1, and comprises an air bag cushion 21 to be inflated at or in the occasion of the vehicle rear crash, an inflator 22 to supply a high pressure gas or fluid to the air bag cushion 21, and a gas supply pipe 23 to connect the inflator 22 with the air bag cushion 21.

Also, there is preferably provided a tensioner device 8 to assist the inflation of the air bag cushion 21 in the present embodiment. Namely, a cylinder 81 which is provided at or near (preferably an upper end of) the back window 11 pulls upward a coupling means (preferably comprising a wire or band 82) coupled to side end portions of the air bag cushion 21 preferably via pulleys 83 (pins, rods and others are applicable instead) which are provided at the back door 1. Thereby, a lateral tension can be applied to an upper end portion 21a of the air bag cushion 21 substantially in a vehicle width direction WD. Thus, the inflation of the air bag cushion 21 is assisted by the applied tension.

Herein, the tension mechanism of the tensioner device 8 preferably is substantially the same as that of the pre-tensioner which is generally used for the seat belt, and therefore its specific description will be omitted here.

FIGS. 1 and 2 illustrate the inflated state of the air bag cushion 21. As illustrated in FIG. 1, the air bag cushion 21 is inflated in a deployment direction DD (being preferably arranged at an angle different from 0° or 180°, preferably substantially normal to the width direction WD), preferably substantially upward, behind the seat back 53 of the rear seat 5 or between the seat back 53 and the back door 1 so as to push the back face of the seat back 53 substantially forward.

By the above-described inflation of the air bag cushion 21 substantially from behind the seat back 53 (or between the seat back 53 and the back door 1) substantially toward the vehicle front, the air bag cushion 21 can be properly inflated between the head portion of the passenger and the back door 53 by pushing the seat back 53 forward even if the seat back 53 is inclined rearward at the vehicle rear crash.

Also, as illustrated in FIG. 2, the air bag cushion 21 is inflated in a substantially rectangular or trapezoid range which is wider than the peripheral area of the back window 11 so as to at least partly, preferably substantially entirely cover the back window 11 from the vehicle inside.

By inflating the air bag cushion 12 like this, even if the passenger is moved rearward due to the impact of the vehicle rear crash, the interference with the back window 11 can be prevented and the functions of impact absorption and occupant restraint can be attained.

There are provided reinforcing portions 21b extending substantial in the deployment direction DD or in a direction at an angle different from 0° or 180°, preferably substantially normal to the width direction WD or preferably substantially vertically at both side ends or end portions, of the air bag cushion 21 to reinforce and prevent the air bag cushion 21 from being easily broken by the tension of the wire 82 of the tension device 8. These reinforcing portions 21b also attain or assist the function of maintaining the substantially-rectangular or trapezoid inflated shape of the air bag cushion 21 so as to locate the side ends of the air bag cushion 21 at or near or adjacent to or overlapping with the side edges of the back window 11.

Also, at at least one intermediate portion (preferably substantially the center) of the air bag cushion 21 are provided one or more, preferably a plurality of sewing lines 21c extending in deployment direction DD, preferably substantially vertically. These sewing lines 21c guides the high pressure gas or fluid flowing in deployment direction DD, preferably substantially upward, surely, with limiting its flowing laterally (in a direction substantially normal thereto or in the vehicle width direction WD), so that the air bag cushion 21 can be inflated in deployment direction DD, preferably substantially upward, surely.

Also, as illustrated in FIG. 2, these sewing lines 21c are located so as to substantially correspond to the both side ends of the headrest 54, and the width of cushion portions 21d which correspond to the headrest 54 preferably is made wider than other portions.

Accordingly, since the high pressure gas is supplied intensively to the portions corresponding to the head portion (not illustrated) of the passenger, the impact absorption function of the air bag device 2 can be improved properly, preventing the head portion of the passenger from hitting the bottom of the bag cushion 21 directly.

Next, the disposition structure of the air bag device 2 at or on or near the bag door 1 will be described in detailed. As illustrated in FIG. 3, the inflator 22 and the air bag cushion 21 of the air bag device 2 are to be provided at an inner face of an inner panel 12 located at or near (preferably the lateral or lower edge of the back window 11 of) the back door 1 which comprises the inner panel 12 and an outer panel 13. The tensioner device 8 is provided via a fixing bracket 81 a at the inner face of the inner panel 12 located at or near (preferably substantially the upper edge of the back window 11 of) the back door 1.

As illustrated in FIG. 4, the inflator 22 of the air bag device 2 is firmly fixed to the inner panel 12 via a fixing bracket 22a preferably with a substantially U-shaped cross section, and the air bag cushion 21 in a folded state (where the folding lines are substantially normal to the deployment direction DD), preferably in a substantially vertically folded state, is also firmly fixed to the inner panel 12 via a guide bracket 24 substantially with a bent or L-shaped cross section.

The guide bracket 24 defines (guide) the inflation or deployment direction DD of the air bag cushion 21 with its substantially bent or L-shaped lower piece such that the inflation or deployment direction DD of the air bag cushion 21 is directed preferably substantially upward from the substantially horizontal direction or width direction WD.

Also, a trim member 14 is provided inside the inner panel 12, and the air bag device 2 and the tensioner device 8 are at least partly covered with this trim member 14. When the air bag cushion 21 is inflated or deployed, this trim member 14 is opened with its intermediate (preferably substantially center) portion bent and its upper end 14a apart from the back window 11 (as illustrated by a dash-dotted line in FIG. 3). In order to ensure this opening, a weak or thinned portion 14b is formed at the intermediate (preferably substantially center) portion of the trim member 14 (see FIG. 4), and an attaching boss or element 14c is provided below the weak portion 14b (see FIG. 3).

Herein, the trim member 14 may be constituted so as to be opened in other manners, such as by proving a tear portion. A reference numeral 15 denotes a weather strip to fix the back window (glass) 11 at the back door 1.

The air bag cushion 21 has a first (preferably upper) chamber 21f extending in deployment direction DD, preferably substantially upward, and a second (preferably lower) chamber 21g extending at an angle different from 0° or 180°, preferably substantially normal to the first chamber 21f, preferably substantially forward, which are at least partly separated from each other by a partition wall 21e as illustrated in FIG. 5. The first (upper) chamber 21f is inflated in deployment direction DD, preferably substantially upward, so as to be at least partly located between the head portion of the passenger and the back door 1. The second (lower) chamber 21 g is to push the back face of the seat back 53 toward the vehicle front.

By providing these two separate chambers 21f, 21g, the single air bag cushion 21 can attain two different functions surely.

Also, there is provided at least one connecting hole 21h at or in the partition wall 21e to introduce the high pressure gas or fluid from the gas or fluid supply pipe 23 into the second (lower) chamber 21g first and then to supply a part of the gas or fluid to the first (upper) chamber 21f. Accordingly, supplying the gas or fluid with the connecting hole 21h enables the initial inflation of the second (lower) chamber 21g and the subsequent inflation of the first (upper) chamber 21f.

As described above, since at first the second (lower) chamber 21g prevents or reduces the rearward inclination of the seat back 53 so as to maintain the enough space between the seat back 53 and back door 1 and then the first (upper) chamber 21f is inflated in deployment direction DD, preferably substantially upward, the air back cushion 21 can be inflated surely between the seat back 53 and the back door 1. Thus, the impact absorption function and the occupant restraint function of the air bag device 2 can be attained.

The inflation timing of the air bag device 2 will be described referring to a timing chart of FIG. 6.

A controller (not illustrated) to operate (or control the deployment of) the air bag device 2 and the like detects the vehicle rear crash by determining that an impact value (for example, acceleration and/or speed) of the rear crash sensor 7 becomes greater than a specified (predetermined or predeterminable) value after a start of the vehicle rear crash (a), and supplies the high pressure gas or fluid to the air bag cushion 21 at the timing (b), so that the air bag cushion 21 starts the inflation or deployment. At the same time or close thereto, the tensioner device 8 operates to assist the inflation or deployment of the air bag cushion 21.

Herein, the timing (b) is set so as to be earlier than or mostly at the same as the timing (c) when the distance between the seat back 53 in the reclining state and the back door 1 becomes shorter than a specified (predetermined or predeterminable) distance after the passenger's weight is applied to the seat back 53 due to the vehicle rear crash and the seat back 53 is inclined substantially rearward (herein, this is a hypothetical timing that the air bag device 2 is not operated), or the timing (d) when the distance between the seat back 53 in the substantially normal state and the back door 1 becomes shorter than the specified (predetermined or predeterminable) distance after the passenger's weight is applied to the seat back 53 due to the vehicle rear crash and the seat back 53 is inclined substantially rearward (herein, this is a hypothetical timing that the air bag device 2 is not operated). Additionally, the timing (b) is set such that at least the lower chamber 21g or both chambers 21f, 21g can be inflated substantially fully within the time period of Δt1 between the timing (b) and (c) or Δt2 between the timing (b) and (d).

In case the rear seat is not equipped with the reclining mechanism, the above-described timing set should be based on the timing (d) accordingly.

By setting the timing (b) to the earlier timing than the timing (c) or (d), the air bag cushion 21 can be inflated surely between the seat back 53 and the back door 1. Also, by setting the timing such that the lower chamber 21g or the both chambers 21f, 21g can be inflated substantially fully within the time period of Δt1 or Δt2, the head portion of the passenger can be prevented from being moved rearward in a moment because the air bag cushion 21 inflated by the high pressure gas or fluid from the inflator 22 pushes forward the upper end of the rearward-inclined seat back 53 even if the hinge 52 is broken and the seat back 53 is inclined rearward further.

Herein, since the time period Δt1 and Δt2 preferably are different depending on the existence of the reclining mechanism of the seat back 53, the inflation timing of the second (lower) chamber 21g or the both chambers 21f and 21g may be changed properly by changing the timing (b) and/or the gas or fluid amount of the high pressure gas from the inflator 22 according to the reclining state.

Further, instead of operating the air bag device 2 and the tensioner device 8 at the substantially same time at the timing (b), the tensioner device 8 may be operated first and then the air bag device 2 may be operated.

In this case where the tensioner device 8 is operated first, since the air bag cushion 21 can be located between the seat back 53 and the bag door 1 when the high pressure gas or fluid has not be applied to the air bag cushion 21 yet, the air bag cushion 21 can be located properly and surely even if the seat back 53 gets close to the back door 1, thereby attaining the occupant restraint function.

Also, since the air bag cushion 21 is inflated after has been located, the impact absorption function can be attained like the other air bag devices and the so-called direct hitting of the head portion of the passenger, which would occur when the air bag cushion 21 is not inflated fully, can be prevented properly.

Next, an operation and effects of the present embodiment which is constituted as described above will be described.

The vehicle V of the present embodiment which is equipped with the air bag device for the rear crash comprises the back door 1 provided at the rear end of the vehicle V, the rear seat 5 provided substantially in front of the back door 1, the seat back 53 of which is or may be located close to the back door 1, and the air bag device 2 provided at or near (preferably the periphery of the lower end portion of) the back window 11 of the back door 1, the air bag device 2 being operative to be inflated or deployed between the back door 1 and the rear seat 5 at the vehicle rear crash.

Accordingly, since the air bag device 2 is provided preferably at the periphery of the lower end portion of the back window 11 of the back door 1, the air bag cushion 21 is or can be inflated in the substantially opposite direction to the rearward inclined direction of the seat back 53, to which the passenger's weight is applied, at the vehicle rear crash. In other words, the deployment direction DD has a component which is substantially opposite to a movement direction of the passenger and/or the seat back 53 upon the occurrence of a vehicle rear crash so that the air bag device 22 imposes a force component on the passenger and/or the seat back 53 which at least partly compensates for a force component on the passenger and/or the seat back 53 due to the vehicle rear crash.

Namely, by providing the air bag device 2 at or near (preferably the periphery of the lower end portion of) the back window 11, the air bag cushion 21 can function so as to prevent or reduce the rearward inclination of the seat back 53 properly.

Thus, the air bag cushion 21 is or can be inflated surely between the head portion of the passenger and the back door 1 even if the seat back 53 is inclined rearward e.g. due to the impact at the vehicle rear crash, and thereby the impact absorption function and the occupant restraint function of the air bag device 22 can be attained.

Herein, in case that this problem when the seat back is inclined rearward due to the impact of the vehicle rear crash was tried to be solved by providing the air bag device at the rear header at the roof rear end as disclosed the US Patent Application Publication No. 2004/0066022 A1, there would be some concerns. Namely, if the air bag cushion was inflated at the early timing when the lower impact has been detected, in order to inflate the air bag cushion between the passenger's head portion and the back door prior to the rearward inclination of the seat back, there is a risk of an malfunction that the air bag cushion would be inflated even at a light vehicle crash. Also, since the inflation direction of the air bag cushion and the direction of rearward inclination of the seat back are downward, or the substantially same direction, there is a concern that if the inflation timing was delayed, the rearward inclination of the seat back would be promoted to the contrary.

In case that the air bag device is provided at the upper end of the seat back as disclosed in the above-described the Japanese Patent Laid-Open Publication No. 11-198699, the inflation angle of the air bag device changes according to the inclination angle of the seat back. Accordingly, the air bag cushion would not be inflated stably between the passenger's head portion and the back door.

The above-described present embodiment in which the air bag device 2 is provided preferably at or near the periphery of the lower end portion of the back window 11 of the back door 1 can solve the problems described above.

Also, according to the present embodiment, the inflation direction of the air bag cushion 21 of the air bag device 2 is set to be directed in the deployment direction DD; preferably substantially upward, such that the inflated air bag cushion 21 is at least partly located substantially between the upper of the seat back 53 of the rear seat 5 and the back door 1.

Accordingly, the inflation or deployment direction DD of the air bag cushion 21 of the air bag device 2 is set to be directed at an angle different from 0° or 180°, preferably substantially normal to the widthwise direction WD; preferably substantially upward, and thereby the inflated air bag cushion 21 is located substantially between the headrest 54 above the seat back 53 of the rear seat 5 and the back door 1.

Thus, the air bag cushion 21 can be inflated surely between the head portion of the passenger above the seat back 53 and the back door 1 even if the air bag device 2 is provided at or near the periphery of the lower end portion of the back window 11, thereby attaining the impact absorption function and the occupant restraint function of the air bag device 2.

Also, according to the present embodiment, there is preferably provided the pulley 83 to support the side end portion of the air bag cushion 21, which is inflated substantially in the curtain shape, at the periphery of the side end portion of the back window 11 of the back door 1.

Accordingly, the side end portion of the air bag cushion 21 which is inflated substantially in the curtain shape is supported at the periphery of the side end portion of the back window 11 by the pulley 83.

Thus, since the air bag cushion 21 is or can be inflated surely substantially in the curtain shape to the periphery of the side end portion of the back window 11, the back window 11 can be covered surely by the air bag cushion 21 and thereby the air bag cushion 21 can be inflated surely between the head portion of the passenger and the back door 1.

Also, according to the present embodiment, there is provided at or near the back door 1 the tensioner device 8 which pulls substantially in the deployment direction DD; preferably substantially upward, the side end portion(s) of the air bag cushion 21, the tensioner device 8 is constituted so as to apply the lateral tension to the distal (upper) end portion of the air bag cushion 21 when the air bag cushion 21 is inflated.

Accordingly, the side end portion of the air bag cushion 21 is pulled substantially in the deployment direction DD; preferably substantially upward, by the tensioner device 8, and the lateral tension is applied to the upper end portion 21a of the air bag cushion 21 when the air bag cushion 21 is inflated.

Thus, the air bag cushion 21 can be inflated surely so as to at least partly, preferably substantially entirely cover the back window 11 and thereby the air bag cushion 21 can be inflated surely between the head portion of the passenger and the back door 11.

Herein, a tension application device with resilient members, such as closes, spring or rubber, may be applied to pull substantially in the deployment direction DD; preferably substantially upward, the air bag cushion 21 and to apply the tension, instead of the tensioner device 8.

Also, according to the present embodiment, the air bag cushion 21 of the air bag device 2 is constituted so as to push or urge substantially forward (or in a pivotal movement where a backward inclination is reduced) the back face of the seat back 53 when the air bag cushion 21 is inflated or deployed.

Accordingly, the back face of the seat back 53 is pushed substantially forward by the inflation of the air bag cushion 21.

Thus, since at the vehicle rear crash the rearward inclination of the seat back 53 is prevented or reduced properly and the rearward movement of the passenger is prevented surely, the head portion of the passenger and the back door 1 can be prevented surely from getting close to each other.

Also, according to the present embodiment, the air bag device 2 is located below the upper end of the seat back 53 of the rear seat 5 which is in the normal state (substantially not being inclined rearward), and the inflation direction DD of the air bag cushion 21 is set to be directed at an angle different from 0° or 180°, preferably substantially normal or substantially upward with respect to the horizontal direction or the vehicle widthwise direction WD.

Accordingly, the air bag cushion 21 is inflated in the deployment direction DD; preferably substantially upward, from the lower position below the upper end of the seat back 53 of the rear seat 5 in the normal state.

Thus, both the function of making the inflated air bag cushion 21 push forward the back face of the seat back 53 and the function of inflating the air bag cushion 21 so as to be at least partly located substantially between the head portion of the passenger and the back door 1 can be attained.

Also, according to the present embodiment, the air bag cushion 21 of the air bag device 2 preferably comprises the lower chamber 21g which (dominantly) pushes forward the back face of the seat back 53 and the upper chamber 21f which is inflated (dominantly) substantially upward (or towards a position between the seat back 53 and the back door 1) so as to be at least partly located substantially between the portion above the seat back 53 and the back door 1.

Accordingly, the lower chamber 21g pushes substantially forward the back face of the seat back 53 and the upper chamber 21f is inflated substantially in the deployment direction DD; preferably substantially upward, so as to be located substantially between the portion above the seat back 53 and the back door 1.

Thus, the function of pushing the back face of the seat back 53 is attained by the second (lower) chamber 21g and the function of inflating the air bag cushion 21 between the head portion of the passenger and the back door 1 is attained by the first (upper) chamber 21f, and thereby the respective functions can be attained surely by the respective cushion portions.

Also, according to the present embodiment, there is provided at the rear seat 5 the reclining mechanism (not specifically illustrated) to change the reclining angle of the seat back 53, and there is provided the space (the baggage compartment T) for allowing the reclining of the seat back behind the seat back 53.

Accordingly, since the air bag cushion 21 is inflated in the substantially opposite direction to the rearward inclined direction of the seat back 53, the air bag cushion 21 can be inflated properly between the head portion of the passenger and the back door 1 even if the seat back 53 is located close to the back door 1 by inclining the seat back 53 rearward with the reclining mechanism.

Thus, the impact absorption function and the occupant restraint function of the air bag device 2 can be attained by inflating the air bag cushion 2 surely between the head portion of the passenger and the back door 1.

### EMBODIMENT 2

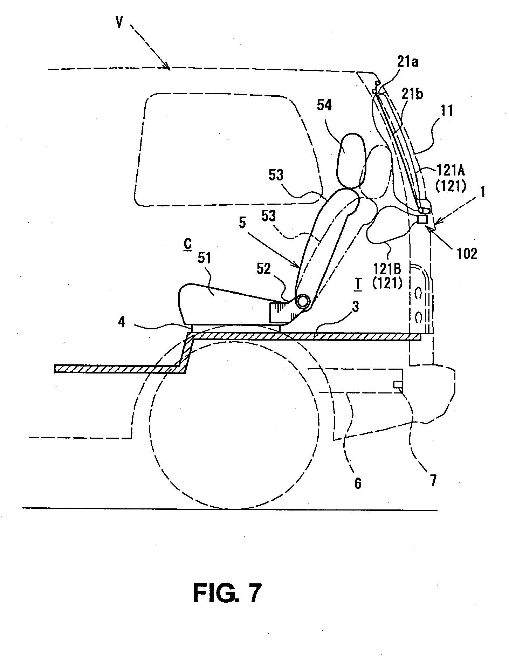

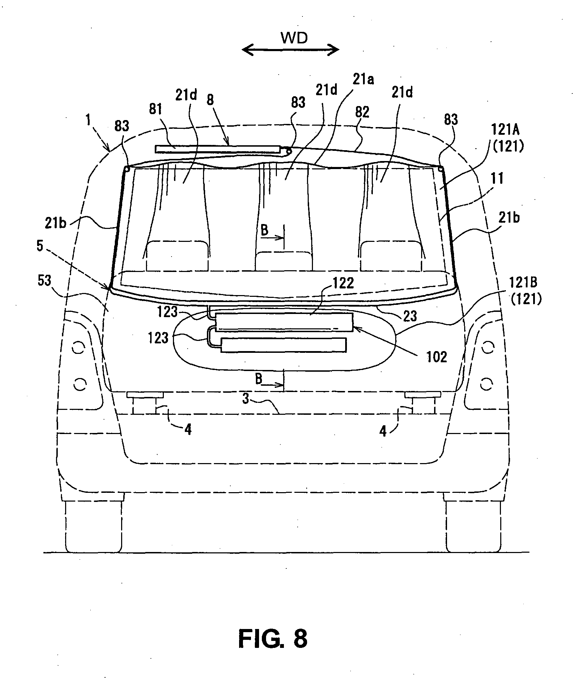

Next, a second preferred embodiment will be described referring to FIGS. 7 through 9. An air bag device 102 of the second embodiment comprises an air bag cushion 121 which are separately divided into two first and second (preferably upper and lower) chambers, a first (preferably substantially upper) cushion 121A to push or urge or interact with the back face of the seat back 53 and a second (preferably substantially lower) cushion 121B to be inflated between the seat back 53 and the back door 1. The similar or same components as those of the first embodiment are denoted by the same reference numerals of the first embodiment, and descriptions of those will be omitted here.

As illustrated in FIG. 7, the air bag cushion 121 of the present embodiment comprises the first (upper) cushion 121A and the second (lower) cushion 121B. The first (upper) cushion 121A is inflated substantially above the seat back 53 and located behind the headrest 54 between the head portion of the passenger and the back door 1. Meanwhile, the second (lower) cushion 121 B is inflated substantially behind the seat back 53 and in a direction different from the first (upper) cushion 121A, preferably substantially horizontally, substantially toward the vehicle front to push the back face of the seat back 53 substantially forward. In other words, the deployment directions of the first (upper) cushion 121A and the second (lower) cushion 121B are set differently, the first (upper) cushion 121A deploying in a direction toward a position behind the headrest 54 between the head portion of the passenger and the back door 1 while the second (lower) cushion 121 B deploys in a direction of the seat back 53 so as to impose a force to the seat back 53 such that it moves and/or pivots away from the back door 1.

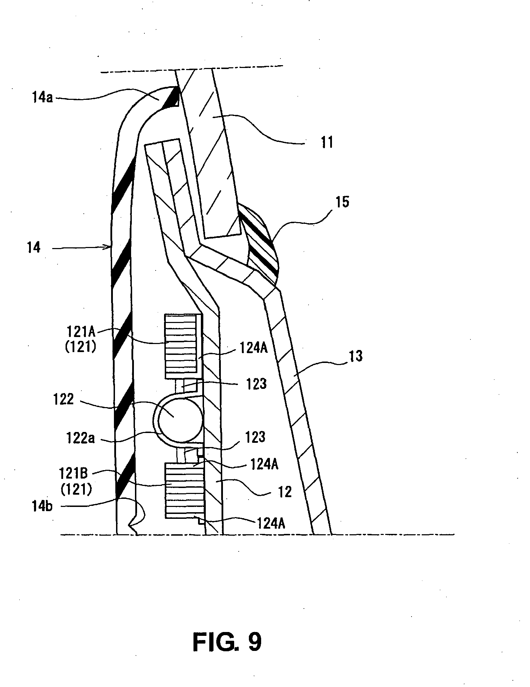

The air bag cushion 121 is provided, as illustrated in FIG. 9, at or on or near the inner face of the inner panel 12 via one or more guide brackets 124A, 124B in a folded state (where the folding lines are substantially normal to the deployment direction DD), preferably in the substantially vertically folded state.

The first (upper) cushion 121A is, like the first embodiment, fixed via a guide bracket 124A with the bent or L-shaped cross section which defines the inflation or deployment direction of the first (upper) cushion 121A such that the inflation direction is directed at an angle different from 0° or 180°, preferably substantially normal to or upward from the horizontal direction or the widthwise direction WD.

The second (lower) cushion 121B is fixed via a guide -bracket 124B with a guide piece extending substantially vertically which defines the inflation or deployment direction of the second (lower) cushion 121B such that the inflation direction is directed towards the seat back 53, preferably at an angle to the horizontal drection which is smaller than that of the first (upper) cushion 121A, preferably substantially horizontally.

Since the respective guide brackets 124A, 124B are provided for the first and second (upper and lower) cushions 121A, 121B, the respective inflation directions can be defined properly. Thus, the inflation can be conducted surely in the desired directions without an interference of the cushions 121A, 121B with each other.

At least partly between the second and first (lower and upper) cushions 121B, 121A is provided an inflator 122 to supply the high pressure gas or fluid to the both cushions 121A, 121B. The inflator 122 is coupled to the second (lower) cushion 121B and the first (upper) cushion 121A via gas or fluid supply pipes 123, 123, so that the both air bag cushions 121A, 121B can be inflated by the single inflator 122 separately.

Accordingly, the inflator 22 can be made in common, and the layout space in the back door 1 can be made compact. Also, since the inflation timing of the upper cushion 121A and the lower cushion 121B are the substantially same, there is no need to adjust the timing particularly. In case the timing between the air bag cushions 121A, 121B needs to be adapted; i.e. one of the two cushions 121A, 121B needs to be deployed at an earlier timing than the other, this delay or timing may be adapted by choosing the length and/or cross-section of the respective gas or fluid supply pipes 123, 123 appropriately.

In the present embodiment, there are provided the weak portion 14b and the attaching boss 14c (see FIG. 3) to ensure the inflation or opening of the trim member 14.

By constituting the air bag cushion 121 by the separate first and second (upper and lower) cushions 121A, 121B in the present embodiment, the respective cushions 121A, 121B can attain the respective functions surely. Particularly, since the air bag device 2 is not comprised of a single air bag cushion unlike the first embodiment, one cushion's improper inflation would- not affect the other cushion's inflation improperly, and thereby the other cushion's proper inflation can be ensured regardless of the one cushion's improper inflation.

Also, since the inflation direction preferably is defined substantially upward and substantially horizontally, the function of the air bag device 2 can be ensured further. Other operation and effects are similar or the same as those of the first embodiment.

Herein, two inflators (not shown) may be provided so as to correspond to each of two air bag cushions 121A, 121B, respectively. In this case, the operation timing of the inflators may be changed differently from each other. For example, in case the lower cushion 121B is operated first, the back face of the seat back 53 can be pushed forward first.

### EMBODIMENT 3

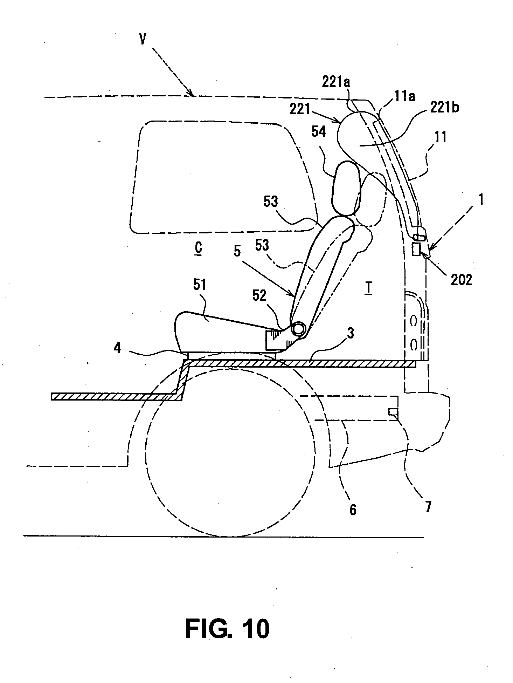

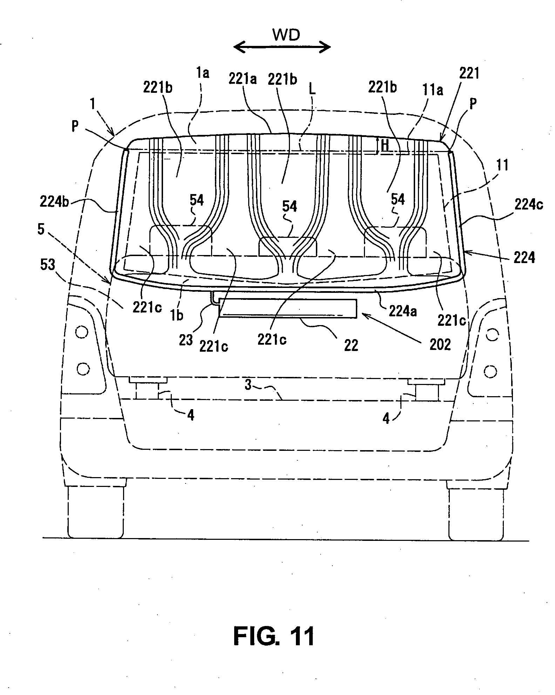

Next, a third preferred embodiment illustrated in FIGS. 10 and 11 will be described. In the third embodiment, like the first and second embodiments, an air bag device 202 is provided at or near (preferably substantially the lower edge portion of) the back window 11 of the back door 1, and an air bag cushion 221 is inflated at least partly substantially between the seat back 53 and the back door 1. Also, the air bag cushion 221 is constituted so as to be inflated surely between the seat back 53 and the back door 1 even if the seat back 53 is inclined rearward e.g. due to the passenger's weight at the vehicle rear crash.

Further, in the present embodiment, the air bag cushion 221 is fixed at or near preferably substantially the lower edge portion and/or both side edge portions of the back window 11 (see FIG. 11) preferably via a substantially U-shaped guide bracket 224 to inflate the air bag cushion 221 over the preferably substantially entire areaof the back window 11. Also, in order to provide a tension to a distal (upper) end portion 221a during the inflation or deployment, the high pressure gas or fluid is supplied to an inflation portion 221b with a large volume, and thereby an apparent length of the upper end portion 221a of the air bag cushion 221 is constituted so as to be shorter.

Namely, accordingly, the back window 11 can be covered by the air bag cushion 221 with its tension itself.

Thus, there is no need of the tensioner device 8 in the present embodiment, unlike the previous embodiments. The similar or same-components as those of the previous embodiments are denoted by the same reference numerals of the previous embodiments, and descriptions of those will be omitted here.

The air bag device 202 of the present embodiment preferably comprises the substantially U-shaped guide bracket 224 provided at or near the lower edge portion and/or both side edge portions of the back window 11, the substantially rectangular or trapezoid air bag cushion 221 whose lower and side portions are to be fixed to the guide bracket 224 and which are inflated preferably inside and substantially upward the back window 11 in the curtain shape, and the inflator 22 to supply the high pressure gas to the air bag cushion 221 at the vehicle rear crash, and the supply pipe 23 to couple the inflator 22 to the air bag cushion 221.

The present embodiment is different from the previous embodiments in the structure of the guide bracket 224 and the air bag cushion 221, and therefore this structure will be described mainly.

The guide bracket 224 is, like the first embodiment, composed of a member with a substantially bent or L-shaped cross section, and comprises a lower edge portion 224a which extends substantially laterally at or near the lower edge of the back window 11, and a side (left) edge portion 224b and a side (right) edge portion 224c which extend at or near both edge portions of the back window 11.

Projections of the guide bracket 224, not illustrated specifically, which project toward the vehicle front preferably are provided outside the respective edge portions 224a, 224b, 224c to guide the air bag cushion 221 inflated toward the center of the back window 11.

Meanwhile, the air bag cushion 221, which is formed in the curtain shape, comprises a plurality of, preferably three inflation portion 221b... which are to be provided extending substantially vertically and connection portions 221c... which the respective inflation portion 221b with the guide bracket 224. Herein, the air bag cushion 221 is folded at the edge portions 224a, 224b, 224c, while it covers the entire area of the back window 11 when inflated.

The inflation portion 221 b is formed such that its gas-flowing section area enlarges gradually upward, so that it is inflated fully in the vehicle width direction WD (see FIG. 11) and forward (see FIG. 10). This is because there can be provided a tension line at the upper end portion 221 a by the-short apparent length of the upper end portion 221 a of the air bag cushion 221.

Namely, although the tension line L can be formed by making the apparent length of the air bag cushion 221 connecting the both ends P, P laterally short, the above-described fold structure of the air bag cushion 221 at the edge portions 224a, 224b, 224c would require rather longer length of this portion because its free end side (the upper end portion 221a) needs to be equivalent to the three sides of the air bag cushion 221. Accordingly, the apparent short length when inflated is attained by providing the three separate inflation portions 221 b laterally.

Also, the upper end portion 221 a of the air bag cushion 221 inflated is located above an upper end side 11 a of the back window 11. Specifically, the width H is set to be more than about 5 cm, and thereby the inflation portion. 221 b when inflated can engage with an upper edge 1 a of the back window 11 of the back door 1.

Accordingly, the engagement of the inflation portions 221 b... with the upper edge 1 a of the back window 11 can constitute a bridge structure of the inflation portions 221 b... between one edge (the upper edge) 1 a and the substantially opposite edge (a lower edge) 1 b over the area of the back window 11 of the back door 1 by being inflated like poles substantially vertically extending.

Further, the large inflation portions 221 b... are located substantially corresponding or adjacent to the headrests 54... of the rear seat 5. Thereby, the head portion of the passenger can be properly prevented from hitting the bottom of the air bag cushion 221 directly, like the previous embodiments. Particularly, since the upper end portion 221 a to receive the head portion of the passenger is formed largely, the above-described effect can be attained more effectively.

Also, since the upper end portion 221b of the inflation portion 221b is formed larger, the upper portion of the air bag cushion 221 can be properly prevented from being bent.

As described above, according to the present embodiment, the air bag cushion 221 when inflated engages with or are fixed to the entire periphery of the back widow 11 of the back door 1.

Accordingly, the tension line L can be formed at the upper end portion of the air bag cushion 221 without the tension device, and the upper end portion 221a of the air bag cushion 221 can be prevented from being moved toward the vehicle rear, thereby preventing the occupant restraint force from decreasing improperly.

Also, according to the present embodiment, the inflation portions 221b... are formed so as to extend toward the upper end portion 221a from the lower portion of the air bag cushion 221.

Thus, the vertical tension of the air bag cushion 221 increases properly and thereby its rearward movement is prevented, thereby preventing the restraint force of the passenger's head portion from decreasing surely.

Particularly, since the air-bag cushion 221 is constituted such that the upper end portion 221a engages with the upper edge 1a of the back window 11 of the back door 1, the inflation portions 221b... are positioned so as to constitute the bridge structure between the upper edge 1a and the lower edge 1b over the area of the back window 11, the rearward movement of the air bag cushion 221 can be prevented surely, thereby improving the occupant restraint function. Other operation and effects are the same as those of the previous embodiments.

The support device of the present invention corresponds to the pulley 83 of the present embodiment. Likewise, the tension application device corresponds to the tensioner 8, the first cushion portion corresponds to the lower chamber 21g and the lower cushion 121B, and the second cushion portion corresponds to the upper chamber 21f and the upper cushion 121A. However, the present invention should not be limited to the above-described embodiments, but any other modifications and improvements may be applied within the scope of a sprit of the present invention.

## Claims

1. A vehicle (V) equipped with an air bag device (2; 102; 202) for a rear crash, comprising:
a back door (1) provided at a rear end of the vehicle (V);
a rear seat (5) provided in front of said back door (1), a seat back (53) of which is located close to the back door (1); and
an air bag device (2; 102; 202) provided at or near a periphery of an end portion of a back window (11) of said back door (1), the air bag device (2; 102; 202) being operative to be inflated between said back door (1) and said rear seat (5) at a vehicle rear crash.

2. The vehicle (V) equipped with an air bag device (2; 102; 202) for a rear crash of claim 1, wherein an inflation direction (DD) of at least one air bag cushion (21; 121; 221) of said air bag device (2; 102; 202) is set to be directed at an angle different from 0° or 180°, preferably substantially normal to a widthwise direction (WD) substantially upward, such that the inflated air bag cushion (21; 121; 221) is at least partly located substantially between a portion above said seat back (53) of the rear seat (5) and said back door (1).

3. The vehicle (V) equipped with an air bag device (2; 102; 202) for a rear crash of one of the preceding claims, wherein there is provided a support device (83) to support a side end portion of said air bag cushion (21; 121), which is inflated in a curtain shape, at a periphery of a side end portion of said back window (11) of the back door (1).

4. The vehicle (V) equipped with an air bag device (2; 102; 202) for a rear crash of one of the preceding claims, wherein there is provided at said back door (1) a tension application device (8) which pulls substantially in an inflation direction (DD), preferably substantially upward, at least one side end portion of said air bag cushion (21; 121), said tension application device (8) being constituted so as to apply a lateral tension to an end portion of said air bag cushion (21; 121) when said air bag cushion (21; 121) is inflated.

5. The vehicle (V) equipped with an air bag device (2; 102; 202) for a rear crash of one of the preceding claims, wherein said air bag cushion (21; 121; 221) of the air bag device (2; 102; 202) is constituted so as to push forward the seat back (53), preferably a back face of said seat back (53), when the air bag cushion (21; 121; 221) is inflated.

6. The vehicle (V) equipped with an air bag device (2; 102; 202) for -a rear crash of one of the preceding claims, wherein said air bag device (2; 102; 202) is located below an upper end of said seat back (53), and the inflation direction of said air bag cushion (21, 121, 221) is set to be directed substantially upward with respect to a horizontal direction.

7. The vehicle (V) equipped with an air bag device (2; 102; 202) for a rear crash of claim 6, wherein said air bag cushion (21; 121) of the air bag device (2; 102) comprises a first cushion portion (21g; 121B) which pushes forward the seat back (53), preferably a back face of said seat back (53), and a second cushion portion (21f; 121A) which is inflated substantially upward so as to be located substantially between the portion above said seat back (53) and said back door (1).

8. The vehicle (V) equipped with an air bag device (2; 102; 202) for a rear crash of one of the preceding claims, wherein there is provided at said rear seat (5) a reclining mechanism operative to change a reclining angle of said seat back (53), and there is provided a space for allowing a reclining of the seat back (53) behind the seat back (53).

9. The vehicle (V) equipped with an air bag device (2; 102; 202) for a rear crash of one of the preceding claims, wherein said air bag cushion (221) of the air bag device (202) in a folded state thereof is provided at a lower edge portion and both side edge portions of said back window (11) in a substantially U shape, and an upper end portion (221a) of the air bag cushion (221) in an inflated state thereof is located above an upper edge portion (11a) of said back window (11).

10. The vehicle (V) equipped with an air bag device (2; 102; 202) for a rear crash of claim 9, wherein said air bag cushion (221) comprises an inflation portion (221b) which is inflated by a gas or fluid supply so as to extend from a lower end portion to the upper end portion thereof.

11. An air bag device (2; 102; 202) for a rear crash of a vehicle (V), which air bag device (2; 102; 202) is to be arranged at or near a periphery of an end portion of a back window (11) of a back door (1) provided at a rear end of the vehicle (V), wherein a rear seat (5) is provided in front of said back door (1), a seat back (53) of which is located close to the back door (1), the air bag device (2; 102; 202) being operative to be inflated between said back door (1) and said rear seat (5) at a vehicle rear crash.
